# EUROPEAN PATENT APPLICATION

(11) **EP 3 974 300 A1**
(43) Date of publication of application: **30.03.2022**
(21) Application number: 20197653.7
(22) Date of filing: 23.09.2020
(51) Int. Cl.: B62J 6/057, A42B 3/04, B60Q 1/26, B62J 6/26

(54) **PORTABLE LIGHT EMITTING SIGNAL APPARATUS**

(71) Applicant: Sänger GmbH, 74575 Schrozberg (DE)
(72) Inventor: Sänger, Chula, 74575 Schrozberg (DE)
(74) Representative: Mollekopf, Gerd Willi

(57) **Abstract**

The invention relates to a portable light emitting blinker and/or warn signal apparatus (2) comprising a housing (6), a light emitting device (33) mounted in or at the housing (6) and adapted to display a direction and/or warning symbol visible at or from an outer surface of the housing (35a, 35b), a tilt sensor (26) arranged in the housing (6) and adapted to output a tilt signal in dependency of the tilt orientation of the housing (6), and a controller (22) arranged in the housing (6), wherein the controller (22) is connected to the tilt sensor (26) and is adapted to control the light emission of the light emitting device (33) in dependency of the tilt signal.

## Description

The present invention relates to a portable light emitting signal apparatus, in particular a portable light emitting blinker and/or warn signal apparatus, for displaying a direction and/or warning symbol.

Nowadays, people are more and more concerned about the environment, which is why many people switch to bicycles, scooters or similar instead of cars. Cycling is environmentally friendly, cheap, and trains the body. With more and more cars on the roads, safety when cycling is becoming more and more important. Especially in the twilight and darkness cyclists are often overlooked.

It is therefore an object of the invention to provide a flexible and compact signal apparatus improving the safety of the user and an arrangement with the signal apparatus.

The invention is defined in claims 1 and 12. Particular embodiments are set out in the dependent claims.

According to claim 1 a portable light emitting blinker and/or warn signal apparatus comprises a housing, a light emitting device mounted in or at the housing and adapted to display a direction and/or warning symbol visible at or from an outer surface of the housing, a tilt sensor arranged in the housing and adapted to output a tilt signal in dependency of the tilt orientation of the housing, and a controller arranged in the housing. The controller is connected to the tilt sensor and is adapted to control the light emission of the light emitting device in dependency of the tilt signal.

The signal apparatus may be used during riding of a bicycle. Alternative fields of application of the signal apparatus are e-bicycles, e-scooters, hoverboards, kick-scooters, skateboards, rollerblades, wheelchairs or mopeds. In general, the signal apparatus is suitable wherever the rider is otherwise dependent on giving hand signals when turning left or right.

The housing may comprise a first and a second half. The first and second half of the housing may be connected by any type of connection, e.g. ultrasound welding. Preferably the connection between the first and second half of the housing is waterproof which allows the signal apparatus to be used in any weather. A touch switch or a charging port, which are discussed in the following, may be waterproof by using a flexible material, e.g. a soft rubber structure.

Preferably the light emitting device has the form of the direction symbol and/or the warn symbol, and/or the light emitting device is formed of a plurality of light emitting elements arranged in the form of the direction symbol and/or the warn symbol.

The light emitting device may be any kind of lamp e.g. energy saving lamps, halogen lamps, but preferably the light emitting device is a LED, in particular formed by a plurality of LEDs forming the light elements.

Preferably, the light emitting device has the form of an arrow. More preferably the arrow is formed by 6, 7, 8, 9 or 10 light emitting elements, wherein a shaft of the arrow is formed e.g. formed by 4 light emitting elements and the left and right side of the tip of the arrow is formed by 3 light emitting elements, respectively. The design of the arrow is not limited to this configuration of light emitting elements, the direction symbol and/or warn symbol may also be formed by any other number of light emitting elements. Alternatively, the light emitting device may have any other form.

Preferably, the controller and/or tilt sensor and/or the light emitting device are mounted on a circuit board disposed within the housing of the signal apparatus, wherein in particular the housing comprises housing sections transparent for the emitted light. Therefore, the direction symbol and/or the warn symbol is clearly visible at or from an outer surface of the housing.

The housing may have at least one fastening means on an outer surface adapted to releasably mount the signal apparatus to a piece of human clothing and/or to a body part of a user.

Preferably the fastening means is at least a part of a hook-and-loop fastener (Velcro) or is at least one magnet which is attached to the outer surface of the housing by e.g. gluing. The corresponding counterpart of the fastening means of the signal apparatus may be attached to the piece of human clothing and/or to a body part of a user. This makes it possible to remove the signal apparatus from the piece of human clothing and/or the body part of a user. When mounting the signal apparatus to a piece of human clothing, it is therefore possible to wash the piece of human clothing which may be e.g. a glove.

The outer surface of the housing may have a position marker, in particular a recess, for indicating the best position for mounting the fastening means.

Preferably, the signal apparatus further comprises a charging port, in particular an USB-C charging port, disposed in the housing for receiving a charging cable and adapted to charge an accumulator disposed within the housing and supplying power to the signal apparatus. The charging port may be mounted on the circuit board. Preferably, the housing has a recess in front of the charging port such that the charging port is accessible from outside the housing. The recess may have a cover, in particular of a soft rubber material, for waterproofness of the signal apparatus, in particular of the charging port.

The accumulator may include one, two, three or more accumulators which are connected in parallel or in series. Alternatively, the signal apparatus does not comprise a charging port and batteries or rechargeable batteries are used for supplying power to the apparatus instead of the accumulator. The signal apparatus then comprises an additional opening, preferably disposed on a side surface of the signal apparatus, for inserting and removing the batteries. In contrast to batteries, the accumulators have the advantage that no new batteries have to be inserted into the signal apparatus, when the accumulators are empty; this saves costs for batteries; further it is easier to keep the signal apparatus waterproof, as there is no need for an additional opening to replace empty batteries.

Preferably, the signal apparatus further comprises an energy indicator disposed in the housing with at least one light emitting element adapted to display the current energy status of the signal apparatus and/or a charging indicator disposed in the housing with at least one light emitting element adapted to display the current charging status of the signal apparatus.

The energy indicator improves the control of the energy status and thus helps to avoid situations in which the apparatus is suddenly empty. Preferably, the light emitting elements are LEDs.

The at least one LED of the energy indicator may illuminate in any color. Preferably the LED illuminates in red, when the energy status of the battery or the accumulator is low. More preferably the energy indicator comprises a plurality of light emitting elements, e.g. LEDs, arranged adjacent to each other, wherein the number of simultaneously illuminated LEDs indicates how much energy is left in the batteries or in the accumulator. This means that one LED after another may turn off in dependency of the current energy status. Preferably, the simultaneously illuminated LEDs may illuminate in any color, most preferably in green color.

In addition or as an alternative, the LEDs may illuminate in different colors depending on the energy status, e.g. green when the energy status is high, orange when the energy status is medium and red when the energy status is low. The different colors simplify the controlling of the energy status for the user. A 'low' energy status may be e.g. an energy status between 0-10%, 0-15%, 0-20%, or 0-30% with respect to the full battery/accumulator. A 'medium' energy status may be e.g. an energy status between 11-69%, 16-74%, 21-79%, or 31-84% with respect to the full battery/accumulator. A 'high' energy status may be e.g. an energy status between 70-100%, 75-100%, 80-100%, or 85-100% with respect to the full battery/accumulator;

The charging indicator is only for embodiments of the apparatus with an accumulator. The charging may help the user to see easily and quickly, even from a distance, whether the device is still in charging mode or has finished the charging of the accumulator. The light emitting element may blink during charging and may turn to constant illumination when charging is finished. Alternatively, a plurality of the light emitting elements illuminate in sequence during charging and turn to constant illumination when charging is finished. Preferably, the light emitting element is a LED which is able to illuminate in any color. Preferably the LED of the charging indicator illuminates red while charging the accumulator and turns from red to green when charging is finished. Alternatively, the LED of the charging indicator may blink green or in any other color during charging and turns to constant illumination in the same or any other color when charging is finished.

Preferably, the signal apparatus further comprises a light shielding element disposed above at least one of the light emitting device, the energy indicator, and the charging indicator. One function of the light shielding element is to cover and limit the light of the light emitting elements, which radiates in all directions, by means of appropriate shapes, e.g. a square or a rectangle. The light shielding element may therefore comprise a hole for a light emitting element of the energy indicator and/or the charging indicator and/or a recess for the light emitting device. Preferably a first and/or a second recess for the light emitting device is divided into individual openings such that after the mounting of the light shielding element, one opening is assigned to one lighting emitting element. The light shield element may further comprise a cavity on a side facing the first half of the housing for receiving a knob.

Preferably, the controller is adapted to operate the light emitting device in a first light emitting mode and in at least a second light emitting mode, wherein the first light emitting mode is blinking of the light emitting device in dependency of the tilt signal output by the tilt sensor, and wherein the second light emitting mode is at least one of: light emitting mode in which the light emitting device is blinking permanently independent of the tilt sensor, and light emitting mode in which the light emitting device illuminates permanently independent of the tilt sensor.

With respect to the light emitting mode in which the light emitting device is blinking permanently independent of the tilt sensor, the light emitting device preferably blinks in the pattern "three times fast - three times slow - three times fast". In general, this mode allows effective transmission of help information when it is dark outside. The mode in which the light emitting device illuminates permanently independent of the tilt sensor is intended for use in dark and narrow sections of roads to attract the attention of passing vehicles.

When using LEDs as light emitting elements, the LEDs may be configured to illuminate in any color. Preferably, the color of the illuminated LEDs is dependent on the different light emitting modes. For example, the LEDs illuminate in a first light emitting mode in green color, in a second light emitting mode in red color or in any further light emitting mode in any other color. Alternatively, the light emitting device, e.g. LEDs, may illuminate in all light emitting modes in the same color.

Preferably, the signal apparatus further comprises an input device which is mounted at the housing, wherein the input device is connected to the controller and adapted to switch between the light emitting modes. Preferably, the input device is e.g. a knob activated by pressing or touching, wherein the input device is operable by a user from the outside of the housing. A touch switch disposed in the housing detects triggering of the input device and outputs a signal to the controller. In particular, the signal apparatus may be started by pressing/touching the input device a first time, wherein in particular the first light emitting mode is automatically activated. The second or any further light emitting mode is activated by triggering the touch switch until the desired light emitting mode. Preferably, the signal apparatus is turned off by triggering the input device again when the signal apparatus is operated in the last light emitting mode.

Preferably, the blinking of the first light emitting mode is activated in dependency of the tilt signal by tilting the signal apparatus by a tilt angle between 45 and 90 degrees, preferably between 30 and 50 degrees, 45 and 70 degrees or 60 and 90 degrees, around a longitudinal housing axis of the signal apparatus, and/or wherein the housing may have a rest position in which a housing plane is parallel to the horizontal plane (B) and in which the tilt angle is zero.

The 'longitudinal housing axis' is the axis along the longest extension of the signal apparatus and preferably corresponds to the symmetry axis of the apparatus. The 'housing plane' is the horizontal plane of the signal apparatus which is perpendicular to the vertical symmetry plane of the apparatus.

The tilt angle is measured starting from the rest position in which the housing plane and thus the signal apparatus is parallel to the horizontal plane (tilt angle is zero degrees). This means in practice that when the apparatus is mounted on e.g. a piece of human clothing, the tilt sensor is activated by tilting a user's arm or hand to which the signal apparatus is mounted around the longitudinal axis. The controller detects the output signal of the tilt sensor and causes blinking of the light emitting device. When the user moves the arm back and the minimum tilt angle is undershot, the tilt sensor is deactivated and the controller stops the blinking of the light emitting device.

Preferably, a detection delay program for the detection of the tilt sensor is set on the controller. Therefore, the light emitting device will not be triggered in normal driving conditions, even if the road is very uneven. This extends the running time and the total life of the accumulator or batteries.

Preferably, the light emitting device comprises a plurality of light emitting elements illuminating in sequence in the first light emitting mode. The light emitting device, preferably LEDs, may form an arrow. Alternatively the light emitting device forms a simple line or any other direction and/or warning symbol. With respect to the embodiment with a light emitting device forming an arrow symbol, preferably first all light emitting elements forming the shaft "--" of the arrow illuminates and then all light emitting elements forming the tip "<" of the arrow illuminates. Thus, the direction of turning is indicated by the specific blinking of the light emitting device. This improves detection at great distances or in foggy weather. Alternatively, during blinking in the first light emitting mode, all light emitting elements may turn on and off at once.

Further, an arrangement comprising a piece of human clothing and signal apparatus as described above is provided. Preferably the piece of human clothing is a glove, alternatively the piece of human clothing may be a sleeve of a jacket or a sweater or any structure applied around the wrist or other part of the user's arm. The piece of human clothing may be made of cotton and/or leather and/or any synthetic material such as polyester or imitation leather.

Preferably, the arrangement further comprises a mounting element which is fixed to the piece of human clothing and is adapted to releasably mount the signal apparatus to the piece of human clothing. The mounting element makes it possible to remove the signal apparatus from the piece of human clothing. As the signal apparatus is releasably mountable of the piece of human clothing and as neither the piece of human clothing nor the mounting element comprises any electrical structures, it is at any time, after removing the signal apparatus, possible to wash the piece of human clothing.

Preferably, the mounting element comprises at least one fastening means adapted to engage with the fastening means of the signal apparatus. The fastening means of the mounting element may be e.g. a part of a hook-and-loop fastener (Velcro) or at least one magnet, wherein the corresponding counterpart is the fastening means of the signal apparatus.

Preferably, the mounting element further comprises an alignment element surrounding the fastening means of the mounting element and which is adapted to align the signal apparatus on the piece of human clothing, and wherein the inner contour of the alignment element and the outer contour of the signal apparatus are paired to each other. The alignment element may facilitate the alignment of the signal apparatus on the piece of human clothing on which the signal apparatus is mounted and thus may enable quick mounting and dismounting of the apparatus on the glove.

The alignment element may be made of any kind of plastic. Preferably, the alignment element is made of a flexible plastic material or a shape retaining rubber material. This improves the wearing comfort of the piece of human clothing. In particular if the piece of human clothing is a glove and the fingers are angled, e.g. when gripping the handlebars of a bicycle, as the glove is not as stiff as with an alignment element made of a rigid material.

The alignment element may be a frame enclosing an area on the surface of the piece of human clothing in which the at least one fastening means of the mounting element is mounted. The opening in the alignment element prevents water accumulation and makes it therefore easier for the user to use the apparatus.

Alternatively, the alignment element may be mounted on a surface of the piece of human clothing, wherein the fastening means of the mounting element is mounted on an inner surface of the alignment element which is on the backside of the surface connecting the alignment element with the piece of human clothing.

In another alternative, the alignment element is configured to simultaneously align and mount the signal apparatus. Therefore, the alignment element may be designed such that the signal apparatus is releasably attachable to the piece of human clothing by clipping or by inserting the signal apparatus into the alignment element.

The signal apparatus is not a mobile phone and the light emitting device is not a display in the form of a display array like it is e.g. used in a mobile phone.

Reference is made in detail to a preferred embodiment of the invention, an example of which is illustrated in the accompanying figures, which show:
- Fig. 1: a perspective outer appearance of a light emitting blinker and/or warn signal apparatus mounted on a mounting element,
- Fig. 2: an exploded view of the light emitting blinker and/or warn signal apparatus of Fig. 1,
- Fig. 3: another view of the exploded view of the light emitting blinker and/or warn signal apparatus of Fig. 2,
- Fig. 4: a schematic back view of the light emitting blinker and/or warn signal apparatus of Fig. 1 for defining a tilt angle, and
- Fig. 5: a block diagram of the light emitting blinker and/or warn signal apparatus of Fig. 1.

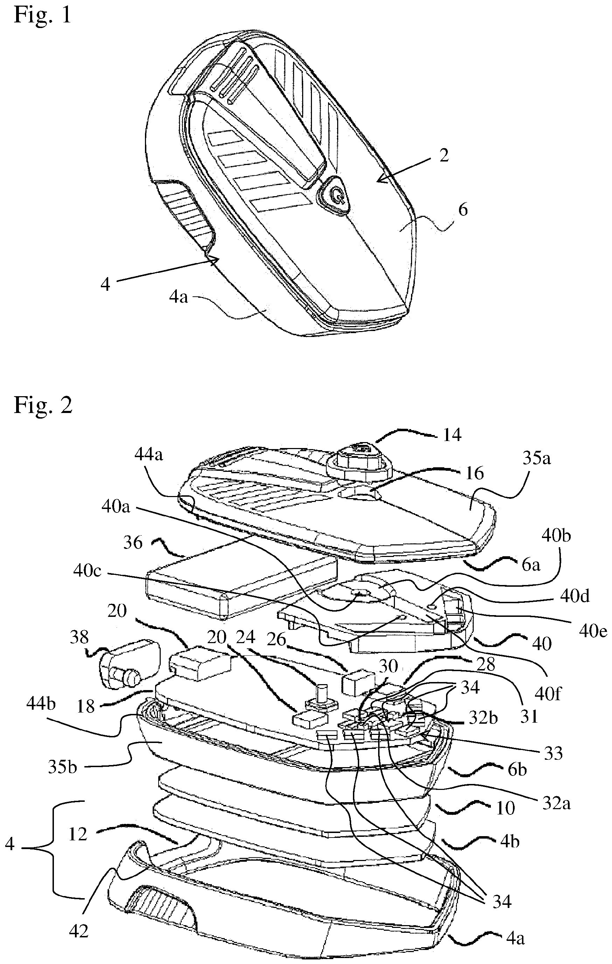

Fig. 1 is a perspective outer appearance of a light emitting blinker and/or warn signal apparatus 2 mounted on a mounting element 4. The signal apparatus 2 comprises a housing 6. The mounting element 4 is adapted to be fixed on a piece of clothing or a body part of the user. The signal apparatus 2 mounted on the mounting element 4 may be used for example when riding a bicycle or rollerblades for attracting the attention of other people, e.g. car drivers with a blinker signal (indicating the turning direction) and/or a warn signal. Therefore, riding of e.g. a bicycle is safer, especially when it is dark outside.

Fig. 2 is an exploded view of the light emitting blinker and/or warn signal apparatus of Fig. 1. The housing 6 of the signal apparatus 2 may comprise a first half and a second half 6a, 6b, wherein when assembling the housing 6, an outer edge of the first half of the housing 44a is connected to an outer edge of the second half of the housing 44b. The connection between the first and second half of the housing 6a, 6b is preferably configured such that the housing 6 is waterproof or substantially waterproof. Therefore, the electric components inside the housing are protected from water.

The signal apparatus 2 may further comprise a circuit board 18 which is disposed within the housing 6. The signal apparatus 2 comprises a light emitting device 33, preferably comprising a plurality of light emitting elements 34, wherein the device 33 may be mounted on the circuit board 18. As shown in Fig. 2, the light emitting elements 34 are preferably mounted in a first end section of the top of the circuit board 18. The light emitting elements 34 may be arranged in the form of a direction symbol or a warn symbol, preferably in the form of an arrow. The signal apparatus 2 further comprises a controller 22 and a tilt sensor 26. The tilt sensor 26 is disposed in the housing and is adapted to output a tilt signal in dependency of the tilt orientation of the signal apparatus 2. The controller is connected to the tilt sensor and is adapted to control the light emitting device 33 in dependency of the tilt signal.

The circuit board 18 may further comprise at least one of the controller 22, a touch switch 24 operated by an input device 14, the tilt sensor 26, a charging management module 28, a charging indicator 30 with at least one light emitting element 32a, an energy indicator 31 with at least one light emitting element 32b, and a charging port, in particular an USB-C port for receiving a charging cable and for charging an accumulator 36. As shown in Fig. 2, preferably all of these components are arranged in the first end section on the top of the circuit board 18 as the light emitting device 34.

Alternatively, at least one of these components may also be mounted to an underside of the circuit board 18 facing the second half of the housing 6b. In another alternative, at least one of all components may be mounted to the housing 6 of the apparatus. Preferably, the charging port 20 is mounted on a second end section of the circuit board which is located on an opposite side of the first end section. The housing 6 may have a cover 38 on a side surface for protecting the charging port 20. The cover 38 is preferably made of a flexible material, e.g. a flexible plastic or rubber.

The accumulator 36 may be disposed within the housing 6 for supplying power to the signal apparatus 2. Preferably, the accumulator 36 is disposed between the circuit board 18 and the first half of the housing 6a. Alternatively, the signal apparatus 2 is operated by batteries or rechargeable batteries instead of an accumulator 36. Such a configuration may have the charging port 20 or not and alternatively or additionally comprises an additional opening for inserting and removing the batteries. The opening is arranged at the housing 6 preferably at the second half of the housing 6b, more preferably at an underside of the second half of the housing 6b. Alternatively, batteries may be changed by opening the signal apparatus 2 by separating the first and second half of the housing 6a, 6b. Instead or in addition to charging the accumulator 36 via a cable it may be charged by inductive coupling (not shown).

The signal apparatus 2 may also have a light shielding element 40 disposed above the circuit board 18. The light shielding element stops light emission to directions which would not correspond to the intended (predefined) form of the direction and/or warning symbol to be displayed by the light emitting device 33. Preferably, the light shielding element 40 is disposed around at least one of the light emitting device 33 to guide the emitted light into the intended emission direction. Additionally the light shielding element may provide additional function for covering the charging and energy indicator 30, 31, the controller 22, the touch switch, the tilt sensor and the charging management module 28, e.g. for giving a more pleasant appearance of the apparatus by visually hiding interior structures. The light shielding element 40 may comprise a hole 40a for the touch switch 24 and/or a hole 40c as a light guide/screen for the light emitting element of the charging indicator 32a and/or a hole 40d as a light guide/screen for the light emitting element of the energy indicator 32b and/or a first and/or a second recess 40e, 40f for the light emitting elements of the light emitting device 34.

Preferably, the first and/or second recesses are in the form of the arranged light emitting elements 34, preferably in the form of an arrow. The first and/or the second recess for the light emitting device 40e, 40f may be divided into individual openings such that after the mounting of the light shielding element 40, one opening is assigned to one light emitting element 34. A cavity 40b for receiving the input device 14, e. g. a knob, may also be provided on the light shielding element 40. Preferably, the cavity 40b is provided on the upper side of the light shielding element 40 encompassing the hole 40a for the touch switch 24.

The first half of the housing 6a may comprise a hole 16 in which the input device 14, preferably a knob, may be arranged. The knob 14 may be triggered/operated from an outer surface of the first half of the housing 35a. Preferably, the knob 14 is arranged in the middle or substantially in the middle of the first half of the housing 6a.

Preferably the first half of the housing 6a comprises housing sections transparent for emitted light, in particular transparent for emitted light of the light emitting device 33 and/or of the light emitting element/s of the charging indicator 32a and/or of the light emitting element/s of energy indicator 32b.

The second half 6b may have a fastening means 10 on an outer surface 35b adapted to releasably mount the signal apparatus 2 to a piece of clothing or a body part of the user. The fastening means 10 may be e.g. a part of a hook and loop fastener or at least a magnet which is fixed to the second half of the housing 6b by e.g. gluing. The mounting element 4 may comprise a fastening means 4b adapted to engage with the fastening means 10 of the signal apparatus 2. Preferably both fastening means 4b, 10 have the same shape.

The mounting element 4 may further comprise an alignment element 4a for aligning the signal apparatus 2 when it is mounted on a piece of clothing or a body part of the user. As shown in Fig. 2, the alignment element 4a is in the shape of a frame with a recess inside. The recess preferably has the shape of the fastening means 4b. Alternatively, the alignment element 4a has no recess and is mounted on a piece of human clothing, wherein the fastening means 4b of the mounting element 4 is mounted on an inner surface of the alignment element 4a. Preferably, the outer contour of the housing 6 is paired to an outer edge 42 of the alignment element 4a. This makes it possible to align the signal apparatus 2 precisely and quickly on a piece of clothing or a body part of the user.

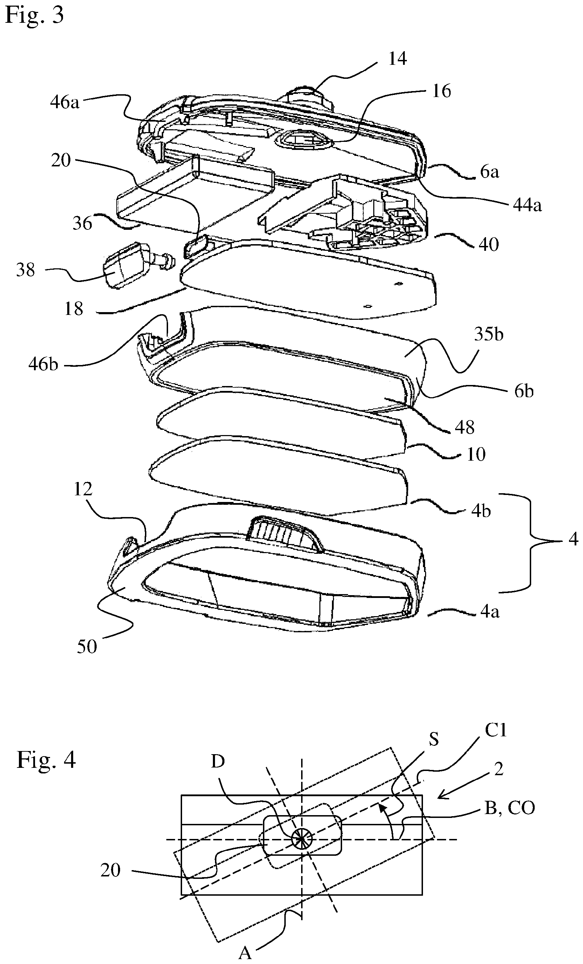

Fig. 3 is another view of the exploded view of the light emitting blinker and/or warn signal apparatus of Fig. 2. The housing 6 comprises a recess 46a, 46b for the charging port 20 which is preferably disposed on the outer surface of the housing 35a, 35b. Preferably, a first half of the recess 46a is arranged at the first half of the housing 6a and a second half of the recess 46b is arranged at the second half of the housing 6b. Alternatively, the recess 46a, 46b may be arranged in the first or the second half of the housing 6a, 6b. The second half of the housing 6b may comprise a position marker/recess 48 on the outer surface 35b for mounting the fastening means 10.

The alignment element 4a may comprise a mounting surface 50 on an underside (side pointing away from the signal apparatus 2 when it is mounted) for mounting the alignment element 4a on a piece of clothing or a body part of a user. The mounting surface 50 is preferably fixed to a piece of clothing by e.g. gluing. Alternatively, the mounting element 4 comprising the alignment element 4a and the fastening means 4b is releasably mountable on a body part, e.g. wrist, of a user by e.g. a loop, which is put around the wrist. The alignment element 4a preferably comprises on a side surface a notch 12 to create space for a shaping, in particular the recess 35a, 35b of the housing for the charging port 20. Therefore, the charging port 20 is also accessible when the signal apparatus 2 is mounted on a piece of clothing or a body part of a user by the mounting element 4.

Fig. 4 is a schematic back view of the light emitting blinker and/or warn signal apparatus of Fig. 1 for defining a tilt angle. In the following, all planes and axis described are perpendicular to the drawing plane and pointing into the drawing plane. The signal apparatus 2 has a vertical plane A, which preferably corresponds to a symmetry plane of the signal apparatus 2, and a housing plane C0 which is perpendicular to the vertical plane A. A longitudinal housing axis D is perpendicular to the vertical plane A and the housing plane C0 and preferably corresponds to the longest extension of the signal apparatus 2.

In a first position, a rest position, the housing plane C0 is parallel to a horizontal plane B, wherein the tilt angle S between the housing plane C0 and the horizontal plane B is zero. The tilt angle S is measured starting from the rest position and corresponds to a rotation around the longitudinal housing axis D.

In a second position, the housing plane C1 is tilted by the tilt angle S around the longitudinal housing axis D. The tilt sensor 26 (see Figs. 2, 3) is triggered by the tilt angle S and outputs a tilt signal which is used by the controller 22 to control the light emitting device 33.

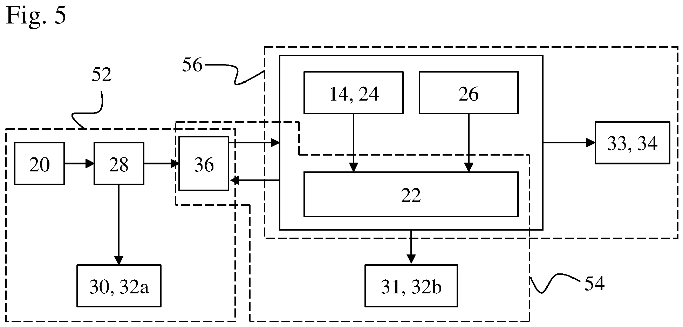

Fig. 5 is a block diagram of the light emitting blinker and/or warn signal apparatus of Fig. 1. The signal apparatus 2 has a light emitting blinker and/or warn signal circuit 56 which may comprise the controller 22, the tilt sensor 26, the light emitting device 33 comprising light emitting elements 34 and the touch switch 24 operated by the input device 14.

The tilt sensor 26 (see Figs. 2, 3) is triggered by the tilt angle S and outputs a tilt signal which is used by the controller 22 to control the light emitting device 33. When the apparatus 2 is mounted on e.g. a piece of human clothing, the tilt sensor 26 is activated by tilting a user's arm or hand to which the signal apparatus 2 is mounted and therefore by tilting the signal apparatus 2 as such around the longitudinal housing axis D. Then the controller 22 detects the output signal of the tilt sensor 26 and causes blinking of the light emitting device. When the user moves the arm back, the housing returns to the rest position in which the tilt angle is zero and thus the tilt sensor 26 is deactivated and the controller 22 turns off the light emitting device 33.

The touch switch 24 is operated by the input device 14, e.g. by pressing a knob on the outer surface of the housing 35a. The touch switch 24 outputs a signal to the controller and is adapted to switch between different light emitting modes of the light emitting device 33. Preferably, the signal apparatus 2 is started by pressing the knob 14 once. Preferably, each further pressing on the knob 14 switches through one light emitting mode after the other. Pressing the button in the last mode may switch the device off. Alternatively, the signal apparatus 2 may comprise a knob for turning the signal apparatus 2 ON or OFF and another knob for switching between the different light emitting modes.

In one of the light emitting modes, the light emitting device 33 is controlled in dependency of the tilt signal of the tilt sensor 26 described above. In another mode, the light emitting device 33 may illuminate independent of the tilt sensor 26, e.g. permanent blinking or illuminating of the light emitting elements 34.

The signal apparatus 2 may further comprise an accumulator circuit 54 comprising the accumulator 36 or at least one battery/rechargeable battery, the controller and the energy indicator 31 with at least one light emitting element 32b. The controller 22 detects the current energy status of the accumulator 36 or the batteries and sends a signal to the energy indicator 31, so that the light emitting element 32b illuminates in a specific color, e.g. red, when the energy status falls below a certain value. Alternatively, the light emitting element 32b may start blinking when the energy status falls below a certain value.

The signal apparatus 2 comprises a charging circuit 52 in an embodiment in which the energy of the signal apparatus 2 is supplied by the accumulator 36 instead of batteries. The charging circuit 52 comprises the accumulator 36, the charging management module 28, the charging port 20 and preferably the charging indicator 30 with at least one light emitting element 32a. The accumulator 36, the charging port 20 and the charging indicator 30 are connected to the charging management module 28. The charging management module 28 comprises a controller for controlling the charging process of the accumulator 36. During charging, the light emitting element of the charging indicator 32a may illuminate in a specific color, e.g. red, and turns to another color, e.g. green when the charging process of the accumulator 36 has been finished. Alternatively, the light emitting element 32a may blink in any color during charging and turns to permanent illumination in the same or any other color when charging is finished.

### Reference Numeral List

- 2: light emitting blinker and/or warn signal apparatus
- 4: mounting element
- 4a: alignment element
- 4b: fastening means of mounting element
- 6: housing
- 6a, 6b: first / second half of the housing
- 10: fastening means
- 12: notch for charging port
- 14: input device (knob)
- 16: hole for input device (knob)
- 18: circuit board
- 20: charging port / USB-C port
- 22: controller
- 24: touch switch
- 26: tilt sensor
- 28: charging management module
- 30: charging indicator
- 31: energy indicator
- 32a, 32b: light emitting element of charging/energy indicator
- 33: light emitting device
- 34: light emitting elements
- 35a, 35b: outer surface of first / second half of the housing
- 36: accumulator
- 38: cover for charging port
- 40: light shielding element
- 40a: hole for touch switch
- 40b: cavity for knob
- 40c: hole for light emitting element of charging indicator
- 40d: hole for light emitting element of energy indicator
- 40e, 40f: first / second recess for light emitting device
- 42: outer edge of alignment element
- 44a, 44b: outer edge of first/second half of the housing
- 46a, 46b: first / second half of recess for charging port
- 48: position marker / recess for fastening means
- 50: mounting surface of alignment element
- 52: charging circuit
- 54: accumulator circuit
- 56: light emitting blinker and/or warn signal circuit
- A: vertical plane / symmetry plane
- B: horizontal plane pointing into the drawing plane
- C0, C1: housing plane pointing into the drawing plane in first/second position
- D: longitudinal housing axis pointing into the drawing plane
- S: tilt angle

## Claims

1. A portable light emitting blinker and/or warn signal apparatus (2) comprising:
a housing (6),
a light emitting device (33) mounted in or at the housing (6) and adapted to display a direction and/or warning symbol visible at or from an outer surface of the housing (35a, 35b),
a tilt sensor (26) arranged in the housing (6) and adapted to output a tilt signal in dependency of the tilt orientation of the housing (6), and
a controller (22) arranged in the housing (6), wherein the controller (22) is connected to the tilt sensor (26) and is adapted to control the light emission of the light emitting device (33) in dependency of the tilt signal.

2. Apparatus according to claim 1,
wherein the light emitting device (33) has the form of the direction symbol and/or the warn symbol, and/or
wherein the light emitting device (33) is formed of a plurality of light emitting elements (34) arranged in the form of the direction symbol and/or the warn symbol.

3. Apparatus according to claim 1 or 2, wherein the controller (22) and/or tilt sensor (26) and/or the light emitting device (33) are mounted on a circuit board (18) disposed within the housing (6) of the signal apparatus (2), wherein in particular the housing (6) comprises housing sections transparent for the emitted light.

4. Apparatus according to claim 1, 2 or 3, wherein the housing (6) has at least one fastening means (10) on an outer surface (35a, 35b) adapted to releasably mount the signal apparatus (2) to a piece of human clothing and/or adapted to releasably attach the signal apparatus to a body part of a user.

5. Apparatus according to any of the preceding claims, wherein the signal apparatus (2) further comprises a charging port (20), in particular an USB-C charging port, disposed in the housing (6) for receiving a charging cable and adapted to charge an accumulator (36) disposed within the housing (6) and supplying power to the signal apparatus (2).

6. Apparatus according to any of the preceding claims, wherein the signal apparatus (2) further comprises an energy indicator (31) disposed in the housing (6) with at least one light emitting element (32b) adapted to display the current energy status of the signal apparatus (2) and/or a charging indicator (30) disposed in the housing (6) with at least one light emitting element (32a) adapted to display the current charging status of the signal apparatus (2).

7. Apparatus according to any of the preceding claims, wherein the signal apparatus (2) further comprises a light shielding element (40) disposed above at least one of the light emitting device (33) adapted to pass the light emitted from the light emitting device such that the form of the direction and/or waring symbol is visible at the outside of the housing (6), wherein optionally the light shielding element is further adapted to pass the light from the energy indicator (31) and/or the charging indicator (30) towards the outside of the housing.

8. Apparatus according to any of the preceding claims, wherein the controller (22) is adapted to operate the light emitting device (33) in a first light emitting mode and in at least a second light emitting mode,
wherein the first light emitting mode is blinking of the light emitting device (33) in dependency of the tilt signal output by the tilt sensor (26), and
wherein the second light emitting mode is at least one of:
- light emitting mode in which the light emitting device (33) is blinking permanently independent of the tilt sensor (26), and
- light emitting mode in which the light emitting device (33) illuminates permanently independent of the tilt sensor (26).

9. Apparatus according to any of the preceding claims, wherein the signal apparatus (2) further comprises an input device (14) which is mounted at the housing (6), wherein the input device (14) is connected to the controller (22) and adapted to switch between light emitting modes or the light emitting modes according to claim 8.

10. Apparatus according to any of the preceding claims,
wherein the controller (22) is adapted to operate the light emitting device (33) in a or the first light emitting mode in which the light emitting device (33) is blinking in dependency of the tilt signal output by the tilt sensor (26), wherein the first light emitting mode is activated in dependency of the tilt signal by tilting the signal apparatus (2) around a longitudinal housing axis (D) of the signal apparatus (2), preferably by tilting by a tilt angle (S) between 45 and 90 degrees, preferably between 30 and 50 degrees, 45 and 70 degrees or 60 and 90 degrees, , and/or
wherein the housing (6) has a rest position in which a housing plane (C1, C2) is parallel to the horizontal plane (B) and in which the tilt angle (S) is zero.

11. Apparatus according to any of the preceding claims, wherein the controller (22) is adapted to operate the light emitting device (33) in a or the first light emitting mode in which the light emitting device (33) is blinking in dependency of the tilt signal output by the tilt sensor (26), and wherein the light emitting device (33) comprises a plurality of light emitting elements (34) illuminating in sequence in the first light emitting mode.

12. Arrangement comprising a piece of human clothing and signal apparatus (2) according to any of the preceding claims.

13. Arrangement according to claim 12, wherein the arrangement further comprises a mounting element (4) which is fixed to the piece of human clothing and is adapted to releasably mount the signal apparatus (2) to the piece of human clothing.

14. Arrangement according to claim 13, wherein the mounting element (4) comprises at least one fastening means (4b) adapted to engage with the fastening means (10) of the signal apparatus (2).

15. Arrangement according to claim 13 or 14, wherein the mounting element (4) further comprises an alignment element (4a) surrounding the fastening means (4b) of the mounting element (4) and which is adapted to align the signal apparatus (2) on the piece of human clothing, and wherein the inner contour of the alignment element (4a) and the outer contour of the signal apparatus (2) is paired to each other.
